Europäisches Patentamt

European Patent Office

Office européen des brevets

(11) Publication number: **0 137 711 B1**

## EUROPEAN PATENT SPECIFICATION

(45) Date of publication of patent specification: **15.04.92**

(21) Application number: **84306003.9**

(22) Date of filing: **29.08.84**

(51) Int. Cl.⁵: **B24D 3/00,** B24D 3/06, B24D 3/28, B24D 3/14, B24D 5/00, B24D 7/00, C08K 3/14, B23D 61/18, B23B 51/00

(54) **Method of making abrasive grit.**

(30) Priority: **29.08.83 US 527403**
**17.02.84 US 581290**

(43) Date of publication of application:
**17.04.85 Bulletin 85/16**

(45) Publication of the grant of the patent:
**15.04.92 Bulletin 92/16**

(84) Designated Contracting States:
**AT BE CH DE FR GB IT LI LU NL SE**

(56) References cited:
**EP-A- 9 315**
**DE-A- 2 805 460**
**US-A- 3 141 746**
**US-A- 3 767 371**
**US-A-42 243 80**

**V.R. CONRADI**
**"Diamant-Schleifscheiben-Technologie",**
**(published before 1974) DE BEERS INDUS-**
**TRIAL DIAMOND DIVISION, Johannesburg,**
**Diamant Information M 13**

**Kirk Othmer, Enzyclopedia of Chemical**
**Technology, 3rd edition, vol.1, page 34**

(73) Proprietor: **GENERAL ELECTRIC COMPANY**
**1 River Road**
**Schenectady New York 12305(US)**

(72) Inventor: **Frushour, Robert Hollingsworth**
**2313 Devonshire**
**Ann Arbor Michigan 48104(US)**

(74) Representative: **Catherine, Alain et al**
**General Electric France Service de Propriété**
**Industrielle 18 Rue Horace Vernet**
**F-92136 Issy-Les-Moulineaux Cedex(FR)**

EP 0 137 711 B1

## Description

The present invention relates to a method for making polycrystalline abrasive grit and to tools having a cutting or abrading surface wherein the abrasive grit is held in a binder. A tool of the present invention may be a drill bit or dressing tool or an impregnated tool such as a grinding wheel, saw or honing stone.

Methods and apparatus for making polycrystalline diamond or cubic boron nitride (CBN) compacts are well known. For example, methods for making diamond compacts are taught in US-A-3,141,746, (DeLai), US-A-3,609,818 and US-A-3,745,623 (both Wentorf, Jr., et al), and US-A-4,224,380 (Bovenkerk, et al). A method for making a CBN compact is taught in US-A-3,767,371 (Wentorf, Jr., et al).

Generally speaking, polycrystalline diamond of CBN compacts are made by high-pressure, high-temperature processing wherein diamond or CBN particles are compressed and heated in the presence of a metallic catalyst or sintering aid material. Under the proper pressure and temperature conditions, diamond to diamond or CBN to CBN bonds are catalyzed to bond the diamond or CBN particles together in a polycrystalline compact. The resulting polycrystalline compact can then be used as an abrasive tool or can be subjected to still further process steps.

One further process step involves leaching non-diamond or CBN material from the compact. For example, US-A-4,224,380 (Bovenkerk, et al) and US-A-4,104,344 (Pope, et al) teach chemically leaching non-diamond material such as sintering aid or catalytic material to provide a polycrystalline compact consisting essentially of self-bonded, abrasive particles with a network of inter-connected empty pores dispersed throughout.

In accordance with the present invention there is provided a method of making an abrasive grit having a selected particle size of from 1 μm to 1 cm. in diameter, which method comprises:

(a) providing a polycrystalline compact substantially greater than said selected particle size and comprising self-bonded, abrasive particles of diamond or cubic boron nitride;

(b) size reducing said compact to pieces having said selected size; and

(c) leaching non-particulate matter either from said compact or said pieces.

The resulting polycrystalline abrasive grit has substantially uniform physical properties; for example, abrasion resistance and fracture toughness properties. Thus, the present invention facilitates production of tools with abrasive grit of substantially uniform, consistent physical properties. The present invention also facilitates the selection of abrasive grit having the specific physical properties desired for a specific use. Weak polycrystalline grit particles are separated from stronger polycrystalline grit during the method of this invention. Furthermore, each polycrystalline grit comprises a plurality of self-bonded randomly oriented crystals. Hence, the polycrystalline grit can be employed in a tool having consistent strength and hardness characteristics. A tool of the present invention is an improved tool enjoying advantages of improved mechanical bond strength between the grit particles and the binder which can be, for example, a resin, metal, plated or vitreous binder.

Abrasive grit produced in accordance with the present invention comprises polycrystalline, self-bonded diamond or cubic boron nitride abrasive grit having a selected size. The abrasive grit is further characterized by having a network of inter-connected, empty pores dispersed throughout each grit particle, said pores comprising between 1% and 30% by volume of the grit particles. The abrasive grit of the present invention has a selected size of from 1 μm to 1 cm. diameter.

Optionally and preferably, an additional step of shaping the pieces to provide grit having a desirable blocky shape thereto is carried out. Also optionally and preferably, an additional step of sizing the pieces or grit is carried out to obtain grit further classified according to size thereby to provide selected sized grit for specific uses.

A tool of the present invention comprises a binding medium having embedded therein abrasive grit made in accordance with the present invention.

## Description of the Preferred Embodiments

The polycrystalline abrasive grit made in accordance with the present invention is useful in tools for grinding, honing, sawing, cutting or polishing and is provided from a starting material which is a conventional polycrystalline diamond or CBN compact. Suitable polycrystalline compacts are well-known in the art and are described, for example, in the aforementioned U.S. Patents 3,141,746; 3,609,818; 3,745,623; 4,224,380; 3,767,371; and 4,104,344. As taught in US-A-4,224,380 (Bovenkerk, et al) a polycrystalline compact is generally made by the steps of:

(a) placing within a reaction cell or charge assembly a mass of abrasive particles of diamond or CBN having a size of from 0.1 to 1,000 um and a mass of material which is active as a sintering aid for the selected abrasive particle mass;

(b) simultaneously subjecting the cell or charge assembly and the contents thereof to temperatures of 1,200°C to 2,000°C and pressures in excess of 40 kbars;

(c) ceasing the input of heat to the cell or charge assembly;

(d) removing the pressure applied to the cell or charge assembly; and

(e) removing from the cell or charge assembly an abrasive body formed by steps (a) to (d) and which is comprised of the particles in a self-bonded form with a metallic phase comprised of a sintering aid material infiltrated throughout the abrasive body.

In short, diamond or CBN compacts are prepared by HP/HT (high pressure/high temperature) processing wherein hot compressed particles are infiltrated with a catalytic material by axial or radial sweep-through of the material through the diamond or CBN particles. During sweep-through, catalyzed sintering of the particles occurs leading to extensive diamond-to-diamond or CBN-to-CBN bonding. Suitable catalytic metals as well as apparatus for carrying out the method are well known in the art and are taught in the above-mentioned patents.

In accordance with the present invention, a polycrystalline compact having a size substantially greater than that of the desired abrasive grit is subjected to size reduction and leaching steps. Preferably additional steps of shaping, cleaning and sizing are also carried out. The resulting product is a polycrystalline abrasive grit having a selected particle size which can be incorporated in an abrasive tool in a conventional manner to provide an improved abrasive tool. The grit is suitable for incorporation in a binder for use in an abrasive tool.

During the size reduction step of the present invention, a polycrystalline compact is subjected to high, repeated impact and grinding to reduce the size of the compact to pieces having the desired selected size. The selected size of pieces ranges from 1 $\mu$m in diameter up to 1 cm. It will be appreciated that it is conventional in the art to size diamond pieces by diameter in $\mu$m up to 1000 $\mu$m and then by pieces per carat up to 1 carat and then by carats per piece. A piece 1 cm. in length would be larger than 10 carats. The preferred size depends upon the specific use for the tool incorporating the abrasive grit.

Size reduction can be accomplished using conventional apparatus such as a conventional milling apparatus. Preferably the size reduction step is carried out by initially reducing the size of the compact by impact and grinding in, for example, a mortar and pestle-type device followed by a final size reduction in a high-energy, impact mill such as the Vortec Model M-1 Diamond Impact Mill operating at 1,250 to 1,500 rpm. The size reduction process may be repeated until pieces of the desired selected size are achieved.

After size reduction, the pieces are optionally and preferably processed to achieve a "blocky" shape. Generally speaking, for most uses an aspect ratio of less than 2 to 1, preferably less than 1.5 to 1, will be desired. By the term "aspect ratio" is meant the ratio of the longest dimension of the piece to the shortest dimension of the same piece. "Blocking" is conventional in the abrasive art and can be accomplished by use of a ball mill, mortar and pestle, or a jet mill such as a 10 cm (4-inch) float energy micro-jet mill system. For example, the pieces can be placed in a stainless steel mill 1/3 full of 1 cm (3/8-inch) carbide balls filled with water and milled for 4-6 hours at 100 rpm, or the pieces can be placed in a mortar and ground with a pestle to the desired shape, or the pieces can be processed through a high-energy jet mill at 10 grams per minute feed rate.

During the leaching step of the method of the present invention, non-diamond material in the case of a polycrystalline diamond compact, or non-CBN material in the case of a CBN compact, is substantially removed from the compact or pieces thereof to provide pieces each having a network of inter-connected, empty pores dispersed throughout and defined by the crystals and remaining metallic phase comprising the piece. Both US-A-4,224,380 (Bovenkerk, et al) and US-A-4,104,344 (Pope, et al) teach methods by which leaching can be carried out. Thus, leaching can be carried out by immersion of the pieces of compact in acid, or by liquid zinc extraction, electrolytic depleting or any other suitable process leaving pieces in self-bonded form with a network of pores throughout. Chemical leaching can be carried out, for example, by placing the pieces in hot perchloric acid, hydrofluoric acid, nitric acid, hydrochloric acid or suitable mixtures thereof. As taught in the Bovenkerk, et al patent, the pores comprise from 5% to 30% by volume of the compact of Bovenkerk, et al. However, for use herein, leaching can be carried out to provide pores comprising a broader range of from 1% to 30% by volume of the piece.

The steps of size reduction and leaching can be carried out in either order; however, it is preferable to carry out the size reduction step first and then carry out the leaching step since leaching will be facilitated by the smaller pieces. Also, the pieces will be simultaneously cleaned during the leaching step. If the compact is subjected to leaching and then size reduction, it will normally be desirable to clean the pieces with a suitable acid solution followed by rinsing with deionized water and drying. Suitable acid solutions are well known in the art and include solutions of sulfuric acid, nitric acid, hydrochloric acid and hydrofluoric acid.

It may be desirable for many uses to have abrasive grit of a selected specific size range within the broad range of from 1 $\mu$m in diameter up to 1 cm. Sizing can be accomplished in any suitable manner. For example, for selected smaller sizes, one can employ sieving using selected matched U.S. Standard wire mesh sieves of the following sizes: Nos. 20, 25, 30, 35, 40, 45, 50, 60, 70, 80, 100, 120, 140, 170, 200, 230, 270, 325 and 400 (sieve openings 850, 710, 600, 500, 425, 355, 300, 250, 212, 180, 150, 125, 106, 90, 75, 63, 53, 45 and 38 $\mu$m), using a 100 gram ± 5 gram sieve load and a Tyler Rotap for 15 minutes. For larger sizes, one can hand select grit within a desired selected size range. Sizing accuracy can be determined by testing in accordance with ANSI Standard B74.16-1971. It will, of course, be appreciated that grit of a particular selected size and a particular selected strength may be preferable for a specific use or in a particular tool. Larger size grit of 18/20 mesh size, i.e. grit which will pass through an 18 mesh sieve (opening 1 mm) but not a 20 mesh sieve (opening 850 $\mu$m), will be especially useful in saw blades and core drills. This grit will desirably also be strong and blocky. Small grit of 325/400 mesh size (openings 45/38 $\mu$m), if strong, will be especially suitable in metal bonded grinding wheels for grinding ceramic or glass. Weaker grit of 324/400 mesh size (opening 45/38 $\mu$m) will be especially suitable in resin bonded grinding wheels for grinding tungsten carbide. Grit of a size of from 12 pieces per carat up to 1 carat per piece can be desirably used in surface set mining bits.

A tool of this invention comprises the desired size polycrystalline grit produced by the method of the present invention in a suitable bonding medium. The grit may be embedded in and bonded to the medium in any conventional manner and, of course, the grit may be metal clad or coated, if desired, for example, for use in a resin bonded wheel. Tools having diamonds or other particulate abrasives held in place by a vitreous, metallic, plated or resin binding agent are well known as are various methods of making them. Examples of such tools which can incorporate the abrasive particles of the present invention are disclosed in US-A-2,077,345 (Van der Pyl); US-A-2,137,200 (Boyer); US-A-2,137,201 (Boyer); US-A-2,173,833 (Fitz-Raldolph); US-A-2,238,351 (Van der Pyl); US-A-2,270,209 (Van der Pyl); US-A-2,561,709 (Nowling); US-A-3,904,391 (Lindstrom, et al); US-A-2,828,197 (Blackmer); US-A-3,087,803 (Bakian); US-A-3,369,879 (Miller); US-A-3,902,873 (Hughes) and US-A-3,645,706 (Bovenkerk, et al) . The abrasive grit produced by the method of the present invention has a porous structure and, being polycrystalline, presents a plurality of faces and angles. Thus, an abrasive tool of the present invention has good mechanical bond strength between the abrasive grit and binding medium. In addition, each abrasive grit comprises a plurality of randomly oriented crystals. Thus, the orientation of each abrasive grit in the binder will not substantially affect the abrasion resistance or fracture toughness properties of the grit in use. In short, a high percent of working grit will be obtained.

The strength of the abrasive material can be well controlled in accordance with the method of this invention. The method parameters employed in making the polycrystalline compact can be selected to provide desired bond strength, from weak to strong, between crystals. The size reduction and optional sizing steps of the present invention can then be employed to selectively obtain the stronger or weaker polycrystalline pieces from the compact. Weak polycrystalline material breaks up during the size reduction step and can be separated during the sizing step. Also, as size reduction inherently reduces weak bonds by breaking them so size reduction tends to provide smaller, stronger polycrystalline pieces. It will be appreciated that for some uses strong grit will be desired, while for other uses weaker or more friable grit will be desired. Thus, not only can abrasive grit particles of uniform size and strength be obtained in accordance with the present invention, but the desired size and strength can be controlled. Thus, particular grit best adapted for a particular use or tool can be employed to provide an improved tool.

A further understanding of the present invention can be obtained from the following examples.

Example 1

A diamond compact is made in accordance with sample B-4 of Example 1 of US-A-4,224,380. The disc-shaped diamond compact is then subjected to high, repeated impact and grinding in a mortar and pestle device to obtain an initial reduction in size and is then subjected to further size reduction in a Vortec Model M-1 Diamond Impact Mill operating at 1,250 to 1,500 rpm until the size of the pieces is in the 10/15 mesh range (U.S. Standard wire mesh sieve of openings 2/1.28 mm). The pieces are then further processed by passing them through a 10 cm (4-inch) fluid-energy Microjet mill at a feed rate of about 10 grams per minute to round off sharp corners (blocking) and to further reduce the size of the pieces. After jet milling, the pieces are sieved to obtain size distributions through the following matched wire mesh sieves:

#16 (opening 1.18 mm)
#18 (opening 1 mm)
#20 (opening 850 $\mu$m)
#25 (opening 710 $\mu$m)
#30 (opening 630 $\mu$m)
pan

The 18/20 mesh product is removed for use as 18/20. The greater than mesh 16 and 16/18 pieces are reprocessed through the jet mill and sieved to obtain additional 18/20 pieces.

The 18/20 mesh pieces are then cleaned in acid baths to remove milling contamination as follows. The 18/20 pieces are soaked in each bath for 2 hours at 190°C (375°F) and then allowed to cool to room temperature and rinsed with deionized water between acid baths. Bath 1 contains concentrated technical grade sulfuric acid and nitric acid in a 10:1 volume ratio. Bath 2 contains hydrochloric acid and nitric acid in a volume ratio of 2:1, and Bath 3 contains nitric acid and hydrofluoric acid in a volume ratio of 1:1. Finally the pieces are rinsed with deionized water and dried at 177°C(350°F) for 1 hour.

The cleaned pieces are then used as abrasive grit in a conventional saw blade.

Example 2

The process of Example 1 is carried out except that the discs are initially broken into pieces of 30/45 mesh range (openings 600/355 µm) and are then processed through the jet mill as described above until the size of 50/60 mesh (openings 300/250 µm) is obtained.

After each jet milling operation, sieving is performed on the following matched wire mesh sieves:
#40 (opening 425 µm)
#45 (opening 355 µm)
#50 (opening 300 µm)
#60 (opening 250 µm)
#70 (opening 212 µm)
#80 (opening 180 µm)
pan
The 50/60 mesh pieces are then cleaned as in Example 1 in acid baths to remove milling contamination and then used as abrasive grit in a conventional metal bonded grinding wheel.

Example 3

The residue from Example 1, i.e. the pieces of less than 20 mesh size (opening 850 µm) and the residue from Example 2, i.e. the pieces of less than 60 mesh size (opening 250 µm), are processed in an M-1 Vortec mill to reduce the size to approximately 170/200 mesh (110 to 90 µm). This feed stock is then processed through a jet mill to further reduce the size and shape the pieces. After each processing, the pieces are sieved in the following matched wire mesh sieves:
#200 (opening 75 µm)
#230 (opening 63 µm)
#270 (opening 53 µm)
#325 (opening 45 µm)
#400 (opening 38 µm)
pan
The 230/270 is removed and the pieces of greater than 200 mesh size is then reprocessed through the jet mill to produce an additional 230/270 cut. The process is repeated until the feed stock of greater than 200 mesh size is eliminated. The 230/270 grit is then cleaned in acid baths as in Example 1 to remove milling contamination and is then used as abrasive grit in a metal-bonded grinding wheel.

Example 4

A polycrystalline diamond compact is made in accordance with Example 1 of US-A-3,609,818. The thin layer of zirconium remaining on the compact is ground off and then the compact is subjected to high, repeated impact and grinding in a mortar and pestle device to obtain an initial reduction in size and is then subjected to further size reduction in a Vortec Model M-1 Diamond Impact Mill operating at 1,250 to 1,500 rpm until the size of the pieces are in the 10/15 mesh range (U.S. Standard wire mesh sieve of openings 2/1.28 mm). The pieces are then further processed by passing them through a 10 cm (4-inch) fluid-energy Microjet jet mill at a feed rate of about 10 grams per minute to round off sharp corners (blocking) and to further reduce the size of the pieces. After jet milling, the pieces are sieved to obtain size distributions through the following matched wire mesh sieves:
#16 (opening 1.18 mm)
#18 (opening 1 mm)
#20 (opening 850 µm)
#25 (opening 710 µm)
#30 (opening 600 µm)
pan
The 18/20 mesh product is removed for use as 18/20. The greater than mesh 16 and 16/18 pieces are reprocessed through the jet mill and sieved to obtain additional 18/20 pieces.

The 18/20 pieces are then subjected to chemical leaching by immersing the pieces in a solution of concentrated nitric and hydrochloric acid (in a 1 to 1 volume ratio) at 190°C(212°F) for 4 hours. The solution is then allowed to cool to room temperature and then decanted. The leaching procedure is repeated 5 times.

Finally, the 18/20 pieces are rinsed with deionized water and dried at 177°C (350°F) for 1 hour. The 18/20 pieces are then used as abrasive grit in a conventional core drill wheel.

Example 5

A diamond compact is made in accordance with sample B-4 of Example 1 of US-A-4,224,380. The disc shaped compact is then broken in a mortar and pestle device to obtain pieces generally larger than 1 carat in size. The pieces are then subjected to acid baths as in Example 1. Then the pieces are passed through a 10 cm (4-inch) fluid-energy Micro-jet jet mill at a feed rate of about 10 grams per minute to round off sharp corners (blocking) and to further reduce the size of the pieces. The pieces are again subjected to acid baths as in Example 1. The pieces are then sized by rough screening with a No. 16 wire mesh sieve (opening 1.18 mm) and the greater than mesh 16 pieces are placed on a shaker table. The table top of the shaker table oscillates and is angled from the horizontal to separate the blocky pieces from the flats in a conventional manner. Then the blocky pieces are selected to obtain pieces having a size of from 12 pieces per carat to 1 carat per piece. A 20 cm (8-inch) diameter surface set mining bit is made by bonding as abrasive grit therein, 1750 of the blocky pieces each having a size of about 5 pieces per carat.

## Claims

1. A method of making an abrasive grit having a selected particle size of from 1 $\mu$m to 1 cm. in diameter, which method comprises:

   (a) providing a polycrystalline compact substantially greater than said selected particle size and comprising self-bonded, abrasive particles of diamond or cubic boron nitride;
   (b) size reducing said compact to pieces having said selected size; and
   (c) leaching non-particulate matter either from said compact or said pieces

2. A method according to claim 1 wherein step (b) is carried out before step (c).

3. A method according to claim 1 wherein step (c) is carried out before step (b).

4. A method according to claim 1, 2 or 3 wherein said grit is subjected to an additional step of blocking and has an aspect ratio of less than 2 to 1.

5. A method according to any one of the preceding claims wherein said grit is subjected to an additional step of sizing.

6. A tool comprising abrasive grit made by a method as claimed in any one of the preceding claims embedded in a binding medium.

7. A tool according to claim 6 wherein said binding medium is a metal binder, a resin binder, a vitreous binder or a plated binder.

8. A tool according to claim 6 or 7 wherein said tool is a saw blade, a grinding wheel or a drill.

## Revendications

1. Procédé de fabrication de grains abrasifs présentant un diamètre particulaire choisi compris entre 1 $\mu$m et 1cm, ce procédé comprenant:

   (a) l'apport d'un comprimé polycristallin de taille nettement supérieure à la taille particulaire choisie et comprenant des particules abrasives autoliées de diamant ou de nitrure de bore cubique ;
   (b) la diminution de taille du comprimé pour obtenir des fragments ayant la taille choisie et
   (c) la lixiviation de la matière non particulaire, soit du comprimé, soit des fragments.

2. Procédé selon la revendication 1, dans lequel on met en oeuvre l'étape (b) avant l'étape (c).

3. Procédé selon la revendication 1, dans lequel on met en oeuvre l'étape (c) avant l'étape (b).

4. Procédé selon la revendication 1, 2 ou 3, dans lequel on fait subir aux grains une étape supplémentaire de mise sous forme de blocs et en ce qu'ils présentent un rapport de forme de moins de 2 pour 1.

5. Procédé selon l'une quelconque des revendications précédentes, dans lequel on fait subir aux grains une étape supplémentaire de calibrage.

6. Outil comprenant des grains abrasifs fabriqués par le procédé selon l'une quelconque des revendications précédentes, noyés dans un milieu liant.

7. Outil selon la revendication 6, dans lequel le milieu liant est un liant métallique, un liant résineux, un liant vitreux ou un liant plaqué.

8. Outil selon la revendication 6 ou 7, dans lequel l'outil est une lame de scie, une meule ou un outil de perçage.

## Patentansprüche

1. Verfahren zum Herstellen von Schleifkörnern mit einer ausgewählten Teilchengröße von 1 $\mu$m bis 1 cm Durchmesser, umfassend:

   (a) Schaffen eines polykristallinen Preßlings, der beträchtlich größer ist als die ausgewählte Teilchengröße und selbstgebundene Schleifteilchen aus Diamant oder kubischem Bornitrid umfaßt;

(b) Verringern der Größe des Preßlings zu Stücken, die die ausgewählte Größe aufweisen und

(c) Auslaugen von nicht teilchenförmigem Material entweder aus dem Preßling oder den Stücken.

2. Verfahren nach Anspruch 1, worin die Stufe (b) vor der Stufe (c) ausgeführt wird.

3. Verfahren nach Anspruch 1, worin die Stufe (c) vor der Stufe (b) ausgeführt wird.

4. Verfahren nach Anspruch 1, 2 oder 3, worin die genannten Körner einer zusätzlichen Stufe des Formens unterworfen werden, und sie ein Aspektverhältnis von weniger als 2:1 aufweisen.

5. Verfahren nach irgendeinem der vorhergehenden Ansprüche, worin die genannten Teilchen einer zusätzlichen Stufe der Klassierung unterworfen werden.

6. Werkzeug umfassend Schleifkörner, die nach einem Verfahren gemäß einem der vorhergehenden Ansprüche hergestellt und in ein Bindemedium eingebettet sind.

7. Werkzeug nach Anspruch 6, worin das Bindemedium ein Metallbinder, ein Harzbinder, ein Glasbinder oder ein plattierter Binder ist.

8. Werkzeug nach Anspruch 6 oder 7, das ein Sägeblatt, eine Schleifscheibe oder ein Bohrer ist.